Europäisches Patentamt

European Patent Office

Office européen des brevets

(19)

(11) Publication number: **0 325 377**

**A2**

# (12) EUROPEAN PATENT APPLICATION

(21) Application number: **89300315.2**

(22) Date of filing: **13.01.89**

(51) Int. Cl.⁴: **B60L 9/22**

(30) Priority: **21.01.88 JP 11216/88**

(43) Date of publication of application:
**26.07.89 Bulletin 89/30**

(84) Designated Contracting States:
**ES FR GB IT**

(71) Applicant: **MITSUBISHI DENKI KABUSHIKI KAISHA**
**Itama Seisakusho 1-1 Tsukaguchihonmachi 8-chome**
**Amagasaki Hyogo(JP)**

(72) Inventor: **Nanzan, Tatsusuke Mitsubishi Denki K. K.**
**Itami Seisakusho 1-1 Tsukaguchi Honmachi 8-chome**
**Amagasaki Hyogo(JP)**
Inventor: **Obi, Hideo Mitsubishi Denki K. K.**
**Itami Seisakusho 1-1 Tsukaguchi Honmachi 8-chome**
**Amagasaki Hyogo(JP)**
Inventor: **Nakamoto, Masahiko Mitsubishi Denki K. K.**
**Itami Seisakusho 1-1 Tsukaguchi Honmachi 8-chome**
**Amagasaki Hyogo(JP)**
Inventor: **Nakamoto, Noriaki Mitsubishi Denki K. K.**
**Itami Seisakusho 1-1 Tsukaguchi Honmachi 8-chome**
**Amagasaki Hyogo(JP)**
Inventor: **Ohta, Mikio Mitsubishi Denki K. K.**
**Itami Seisakusho 1-1 Tsukaguchi Honmachi 8-chome**
**Amagasaki Hyogo(JP)**

(74) Representative: **Rackham, Stephen Neil et al**
**GILL JENNINGS & EVERY 53-64 Chancery Lane**
**London WC2A 1HN(GB)**

(54) **Control device for an electric vehicle.**

(57) An electric vehicle control device for controlling the operation of an electric vehicle having at least one a.c. driving motor (18) coupled via a current collector (1) to a d.c. power supply, comprises control means (17) to convert the d.c. power supply into an alternating current, a reverse L type first filter circuit composed of a first filter reactor (10, 11) and a first filter capacitor (16) coupled between the current collector (1) and the control means (17), and a second filter circuit composed of series connected second filter reactor (19) and second filter capacitor (20) connected in parallel to the first filter capacitor (16). The second filter circuit has circuit constants selected so that the arithmetic sum of the impedances of the second filter circuit (19, 20) and of the first filter capacitor (16) have a small value, compared with its product, at the operating frequency of the control means (17). Thus the composite imped-ance of the first and second filters is maximised to block feedback from the control means (17) to the d.c. current supply.

FIG. 1

## Control Device For An Electric Vehicle

The present invention relates to a control device for an electric vehicle and, particularly, to one which eliminates the problem of induction in a signal system of such an electric vehicle as a result of high frequency current fed back from the control device through a power transmission line.

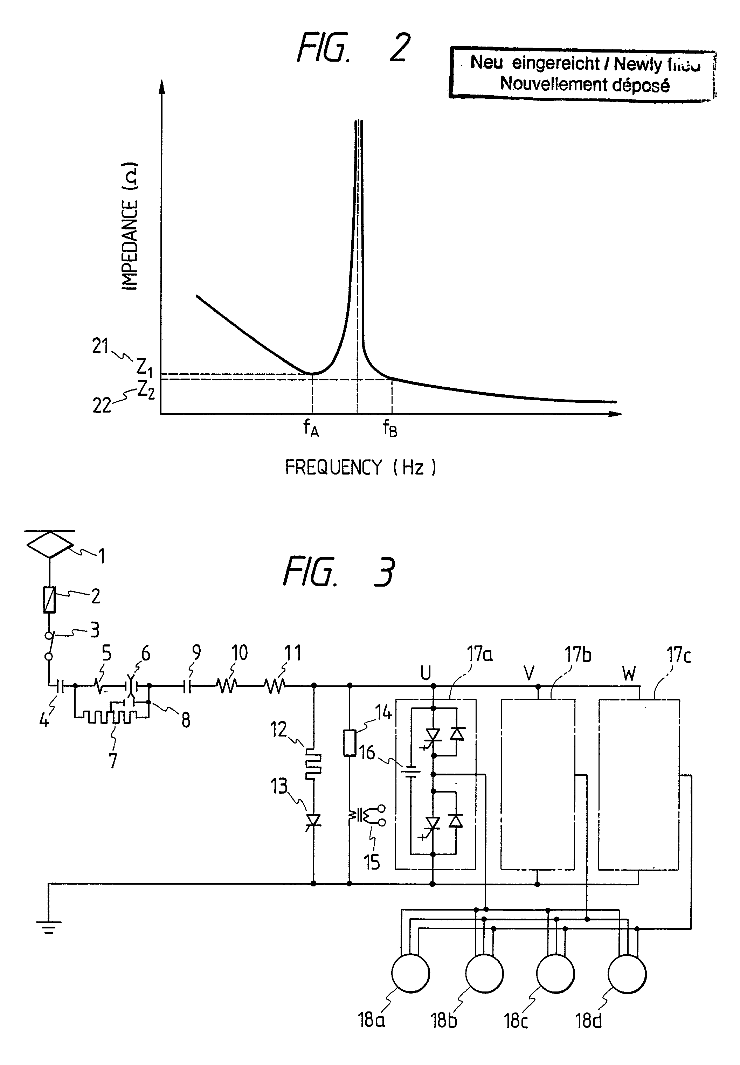

Figure 3 shows a typical example of a conventional control device of an electric vehicle which is disclosed in "Drive/Control Device for Prototype Electric Vehicle for Tokyo Metropolitan Traffic Agency Line No. 12", "Reports in the 23rd Domestic Symposium on Utilization of Cybernetics in Rail Way", pages 236 to 240, Japan Rail Way Cybernetics Conference. As shown in Figure 3, d.c. electric power is collected from a power line through a current collector 1, a main fuse 2, a main switch 3, a line breaker 4, a trip resistor 5, a high speed breaker 6, a limiting/charging resistor 7, a charging contactor 8, a line breaker 9, filter reactors 10 and 11, an overvoltage series resistor 12, an overvoltage thyristor 13, a resistor 14 and a D.C. potential transformer (DCPT) 15 connected in series with the resistor 14. A filter capacitor 16 of a U phase inverter 17a constitutes, together with the filter reactors 10 and 11, a reverse L type filter circuit. The U phase inverter 17a constitutes, together with the filter reactors 10 and 11, a reverse L type filter circuit. The U phase inverter includes a pair of series connected thyristors each having a parallel diode. V and W phase inverters 17b and 17c are also provided and the inverters 17 actuate induction motors 18a to 18d.

When the control device constructed as above is operated as a pulse width modulated-PWM-inverter, a high frequency component having a frequency 6 times the inverter frequency is fed back and superimposed on the d.c. input as a result of the PWM modulation. Therefore, when the inverters operate at an inverter frequency $f_1 = f_0/6$ where $f_0$ is an operating frequency of a signal device, a high frequency current having a frequency $f_0$ flows through the power line which may cause signal device to malfunction. To solve this problem, it is usual to increase the value of the filter reactors 10 and 11 and thereby reduce the high frequency current fed back to the power line.

That is, where the voltage level of the high frequency current flowing through the power line and the inductance of the filter reactors 10 and 11 are represented by E, $L_0$ and $L_1$, respectively, an impedance of the power line when looked at from the inverters 17a, 17b and 17c becomes $j\omega(L_0 + L_1)$ and, therefore, the high frequency current I fed back into the power line becomes:

$$I = E \cdot j (L_0 + L_1) \quad (1)$$

Thus, by increasing the inductance value $(L_0 + L_1)$ of the filter reactors, the current I can be reduced below a predetermined standard of interference current for the signal device at a predetermined frequency as shown by equation (1).

In such a conventional control device as the inductance value of the reactors is increased their physical size becomes very large, which requires a large space on the vehicle.

According to the present invention a control device includes, in addition to a reverse L type first filter circuit composed of a first filter reactor and a first filter capacitor and provided between a collector and a control device for controlling a driving motor of an electric car, a second filter circuit composed of a second filter reactor and a second filter capacitor connected in series with the second filter reactor. The second filter circuit is connected in parallel to the first filter capacitor and a sum of impedances of the second filter circuit and the first filter capacitor looked from the control device exhibits a small value for a specific frequency.

An advantage of the present invention is that the control device is compact and can be manufactured with minimum cost.

In the present invention, the sum Z of the impedances of the second filter circuit and the first filter capacitor looked at from the control device can be represented by the following equation:

$$Z = (1-\omega^2 L_2 C_2)/j\omega(C_1 + C_2-\omega^2 L_2 C_1 C_2) \quad (2)$$

where $C_1$ is an impedance of the first filter capacitor, $C_2$ is an impedance of the second filter capacitor and $L_2$ is an impedance of the second filter reactor and values of the respective impedances $C_1$, $C_2$ and $L_2$ are selected such that the impedance Z becomes a minimum for a specific frequency.

A particular example of a control device in accordance with this invention will now be described with reference to the accompanying drawings, in which:-

Figure 1 is a circuit diagram of a control device according to the present invention;

Figure 2 is a graph showing a frequency characteristics of a combined impedance of a second filter circuit and a first filter capacitor in Figure 1; and,

Figure 3 is a circuit diagram of a conventional control device.

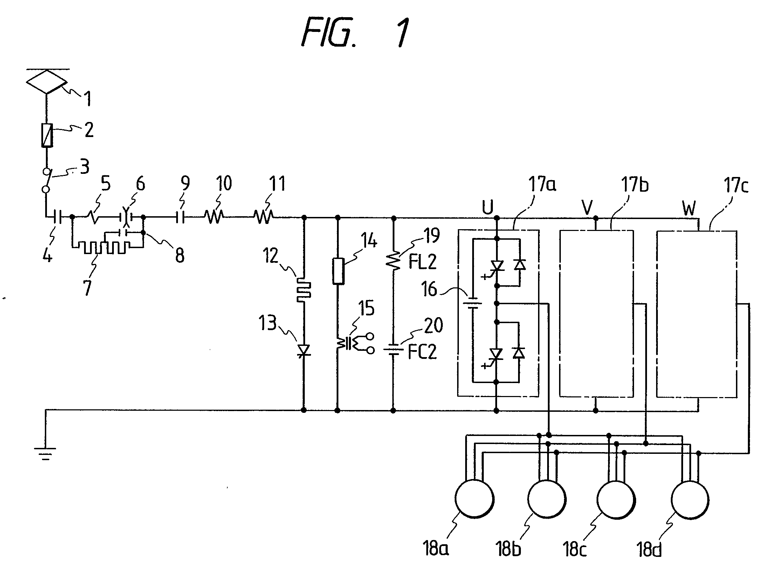

In Figure 1 which is similar to Figure 3 and same reference numerals depict some components as those shown in Figure 3, a second filter reactor 19 and a second filter capacitor 20 connected in series with the reactor 19 are connected across parallel connected inverters 17a, 17b and 17c. The reactor 19 and the capacitor 20 constitute a second filter circuit which is connected in parallel to a filter capacitor 16 and circuit constants of the second filter circuit are selected such that a total impedance value of the second filter circuit when looked from the side of the filter capacitor 16 and the control device becomes small at a specific frequency.

Figure 2 is a graph showing a frequency characteristics of the total impedance of the second filter circuit in which reference numerals 21 and 22 depict a first and second minimum values thereof, respectively.

In the control device of the electric car constructed as above, when it is assumed that an impedance of the filter circuit composed of the filter reactors 10 and 11 when looked from the control device to a power line at a specific frequency is represented by $Z_1$ and an impedance of a circuit composed of the filter capacitor 16 (FCU for U phase, FCV for V phase, FCW for W phase), the second filter reactor 19 and the second filter capacitor 20 when looked from the control device to the power line at a specific frequency is represented by $Z_2$ and that a current I at the specific frequency flows from the inverters 17a, 17b and 17c as the control device through the filter capacitor 16 and the second filter circuit 19, 20 in parallel, a ratio of current flowing through the filter capacitor 16 to that through the filter circuit is determined by the impedances $Z_1$ and $Z_2$.

Assuming that the current flowing through the impedance $Z_1$ and that through the impedance $Z_2$ are represented by $I_1$ and $I_2$, respectively, the currents I, $I_1$ and $I_2$ are represented by

$$I = I_1 + I_2 \qquad (3)$$
$$I_1 = I \, Z_2/(Z_1 + Z_2) \qquad (4)$$
$$I_2 = I \, Z_1/(A_1 + A_2) \qquad (5)$$

Therefore, in order to reduce the high frequency current fed back into the power line, it is enough to reduce the current $I_1$ and, in order to minimize the current $I_1$, it is enough to minimize the impedance $Z_2$. Thus, by selecting the circuit constants of the second filter circuit such that the impedance $Z_2$ becomes minimum, it is possible to solve the induction problem for a specific frequency. The circuit constants of the second filter circuit are set such that the total impedance $Z_2$ of this filter circuit and the filter capacitor 16 takes a value near either of two minimum values existing for a specific frequency or takes two values near minimum values for two frequencies.

As mentioned above, the present invention includes a second filter circuit composed of a second filter reactor and a second filter capacitor connected in series with the former, the second filter circuit being connected in parallel to a first filter capacitor and having circuit constants selected such that a total impedance of this filter circuit and the first filter capacitor becomes small value for a specific frequency. Therefore, the induction problem for the specific frequency can be solved and the minimization of the device can be achieved at low cost, resulting in a minimized equipping space.

## Claims

1. An electric vehicle control device for controlling the operation of an electric vehicle having at least one a.c. driving motor (18) coupled via a current collector (1) to a d.c. power supply, comprising control means (17) to convert the d.c. power supply into an alternating current, and a reverse L type first filter circuit composed of a first filter reactor (10, 11) and a first filter capacitor (16) coupled between the current collector (1) and the control means (17), characterised in that the control device also includes a second filter circuit composed of series connected second filter reactor (19) and second filter capacitor (20) connected in parallel to the first filter capacitor (16) and in that the second filter circuit has circuit constants selected so that the arithmetic sum of the impedances of the second filter circuit (19, 20) and of the first filter capacitor (16) has a small value, compared with its product, at the operating frequency of the control means (17) and thus the composite impedance of the first and second filters is maximised to block feedback from the control means (17) to the d.c. current supply.

2. An electric vehicle control device according to claim 1, wherein the control means include inverter means (17).

3. A power converter for an electric vehicle having at least one a.c. driving motor (18) and a current collector (1) for connection to a d.c. supply, comprising inverter means (17) to convert current from the d.c. supply into an alternating current, and a reverse L type first filter circuit formed by a first filter reactor (10, 11) and a capacitance (16) provided by the inverter means (17), characterised in that the power converter also includes a second filter circuit formed by a series connected second filter reactor (19) and a second filter capacitance (20) connected in parallel with the inverter means (17), and in that the circuit constants of the second filter circuit (19, 20) are selected to provide an impedance which is substantially equal and opposite to that of the capacitance (16) provided by the inverter means (17) at the operating frequency of the inverter means (17) whereby the filters substantially block feedback of alternating current to the d.c. current supply.

4. An electric vehicle control device for controlling an operation of an electric vehicle to be driven by at least one a.c. motor through an associated control means, comprising a reverse L type first filter circuit composed of a first filter reactor and a first filter capacitor and disposed between a current collector and said control means and a second filter circuit composed of series connected second filter reactor and a second filter capacitor and connected in parallel to the first filter capacitor, said second filter circuit having circuit constants selected such that a composite impedance of said second filter circuit and said first filter capacitor when looked from said control means has a small value at a specific frequency.

FIG. 1

EP 0 325 377 A2

FIG. 2

FIG. 3